# EUROPÄISCHE PATENTSCHRIFT

(11) **EP 0 766 488 B1**
(45) Veröffentlichungstag und Bekanntmachung des Hinweises auf die Patenterteilung: **03.05.2006**
(21) Anmeldenummer: 96115114.9
(22) Anmeldetag: 20.09.1996
(51) Int. Cl.: H04Q 3/545

(54) **Verfahren zur Kopplung von Datenbearbeitungseinheiten, Verfahren zum Steuern einer Vermittlungsstelle, Datenbearbeitungseinheit, Steuerung und Vermittlungsstelle**
Method for coupling of data processing units, method for controlling an exchange, data processing unit, control device and exchange
Procédé pour le couplage d'unités de traitement de données, procédé pour la commande d'un central de commutation, unité de traitement de données, dispositif de commande et central de commutation

(30) Priorität: 30.09.1995 DE 19536649
(43) Veröffentlichungstag der Anmeldung: 02.04.1997
(73) Patentinhaber: Alcatel, 75008 Paris (FR)
(72) Erfinder: Daase, Detlef, Dr., 12205 Berlin (DE); Legat, Karl-Heinz, 71272 Renningen (DE)
(74) Vertreter: Brose, Gerhard

(56) Entgegenhaltungen:
- EP-A- 0 449 494
- US-A- 4 993 017
- US-A- 5 432 931

## Beschreibung

Die Erfindung betrifft ein Verfahren zur Kopplung von Datenbearbeitungseinheiten, ein Verfahren zum Steuern einer Vermittlungsstelle, eine Datenbearbeitungseinheit, eine Steuerung und eine Vermittlungsstelle.

Für eine Kopplung von Abläufen oder Prozessen eines Rechensystems ist es notwendig, daß diese miteinander kommunizieren. Unter Ablauf wird hierbei der Ablauf eines Programms verstanden und als Prozess wird der Ablauf eines Programms bezeichnet, falls dieser Ablauf durch ein Betriebssystem verwaltet wird (siehe auch Kapitel 1.2 Prozesse, Seite 15 des Buches "Betriebssystem: eine Einführung" von H.-J. Siegert, Oldenburg Verlag, 1991).

Mechanismen, um die Kopplung von vom selben Betriebssystem verwalteten Prozessen zu ermöglichen, werden beispielsweise in dem Kapitel "Prozesskommunikation" des Buches "Betriebssysteme: eine Einführung" von H.-J. Siegert, Oldenburg Verlag, 1991 auf den Seiten 81-96 beschrieben.

Die auch als Interprozesskommunikation bezeichnete Kommunikation zwischen den Prozessen erfolgt hierbei zum einen über den Austausch von Nachrichten mittels Diensten des Betriebssystems. Zum anderen ist es auch möglich, daß die Kommunikation ohne Unterstützung und Kenntnis des Betriebssystems durch Austausch von Nachrichten über vom Betriebssystem bereitgestellte gemeinsame Speicherbereiche realisiert wird. Die an der Kommunikation beteiligten Prozesse können hierbei auch auf verschiedenen Rechnern ablaufen, falls es sich um ein auf mehrere Rechner verteiltes Betriebssystem handelt. Diese Mechanismen sind jedoch nur für die Kommunikation zwischen vom selben Betriebssystem verwalteten Prozessen brauchbar und nicht auf die Kommunikation zwischen von verschiedenen Betriebssystemen verwalteten Prozessen anwendbar.

Aus der EP 0 520 083 A1 ist ein Verfahren zur Datenkonsistenzsicherung in einem digitalen Fernmeldevermittlungssystem und ein solches Fernmeldevermittlungssystem bekannt, bei dem Datenbanken in hierarchischer Weise angeordnet sind. Es wird beschrieben, wie die einander entsprechenden Daten miteinander abgeglichen werden.

Die EP 0 449 494 A2 beschäftigt sich mit dem Datenaustausch zwischen Datenbanken mit unterschiedlichen Datenmodellen.

Desweiteren ist es bekannt, Daten mittels einer Datenbank für eine Vielzahl von Prozessen zentral zu verwalten. Die Datenbank ermöglicht es den Prozessen, auf die Daten entsprechend dem in der Datenbank implementierten Datenmodell gemeinsam zuzugreifen. Es ist hierbei auch möglich, auf eine solche Datenbank von einem anderen Rechner aus zuzugreifen.

Die Erfindung geht nun von einer Steuerung für ein ISDN-Kommunikationssystem (ISDN = Integrated Services Digital Network) aus, die in der Deutschen Patentschrift DE 41 04 365 C1 beschrieben ist und bei der von verschiedenen Betriebssystemen verwaltete Prozesse miteinander kommunizieren.

Diese Steuerung verfügt über zwei Betriebssysteme, die auf demselben Rechner arbeiten. Hierbei handelt es sich zum einen um ein Teilnehmerbetriebssystem für teilnehmerindividuelle Datenverarbeitung und zum anderen um ein Echtzeitbetriebssystem für kommunikationstechnische Aufgaben. Diese Betriebssysteme sind derart miteinander gekoppelt, daß die vom Echtzeitbetriebssystem verwalteten Daten oder Datenapplikationen dem Zugriff der Prozesse des Teilnehmerbetriebssystems überstellt werden können und andererseits die unter dem Teilnehmerbetriebssystem geführten Datenapplikationen von Prozessen des Echtzeitbetriebssystems übernommen werden können. Die Kommunikation zwischen Prozessen, die von verschiedenen Betriebssystemen verwaltet werden, erfolgt hierbei durch Austausch von Nachrichten über ein gemeinsames Speichersegment. Dieses gemeinsame Speichersegment, das als Interkommunikations-Datensegment beschrieben wird, wird durch zwei gleiche Datensegment-Skriptoren festgelegt, die dieses Speichersegment so für Abläufe und Prozesse beider Betriebssysteme benutzbar machen.

Diese Art der Verkopplung hat den Nachteil, daß zumindest ein Rechner paralell mit beiden Betriebssystemen arbeiten muß, um den Zugriff auf das gemeinsame Speichersegment von beiden Betriebssystemen aus zu ermöglichen.

Weiter ist nachteilig, daß jegliche Übergabe von Daten zwischen Prozessen verschiedener Betriebssysteme genau aufeinander abgestimmte, aufwendige Übergabeprozeduren in allen daran beteiligten Prozessen erfordert. Dies ist mit einem hohen Implementierungsaufwand und mit komplexen Abhängigkeiten zwischen Steuerprogrammen verbunden, die auf verschiedenen Betriebssystemen arbeiten.

Der Erfindung liegt nun die Aufgabe zugrunde, den Aufbau einer Steuerung aus Datenbearbeitungseinheiten zu ermöglichen, die mit eigenständigen Betriebssystemen arbeiten.

Unter Datenbearbeitungseinheit wird hierbei eine logische Einheit verstanden, die von einem Betriebssystem und den auf diesem Betriebssystem arbeitenden Steuerprogrammen sowie der zugrunde liegenden Hardware-Plattform gebildet wird. Im Regelfall wird es sich so bei einer Datenbearbeitungseinheit um einen Rechner mit den zugehörigen peripheren Komponenten handeln, der mit einem eigenständigen Betriebssystem arbeitet. Es kann sich jedoch auch um ein Rechnersystem mit einem verteilten Betriebssystem oder auch um einen logischen oder funktionellen Teil eines Rechners handeln, wenn auf dem Rechner mehrere eigenständige Betriebssysteme arbeiten.

Diese Aufgabe wird gelöst durch ein Verfahren zur Kopplung von Datenbearbeitungseinheiten nach der Lehre von Anspruch 1, durch ein Verfahren zum Steuern einer Vermittlungsstelle nach der Lehre von Anspruch 12, sowie durch eine Datenbearbeitungseinheit, eine Steuerung und eine Vermittlungsstelle nach der Lehre von Anspruch 13, 14 bzw. 15.

Der Grundgedanke der Erfindung ist, zumindest einen Teil der Daten einer jeden der Datenbearbeitungseinheiten jeweils in einer Datenbank zu verwalten und diese Datenbanken derart zu verkoppeln, daß die Daten der jeweiligen anderen Datenbearbeitungseinheit entsprechend des Datenmodells der jeweiligen Datenbank für Prozesse der jeweiligen Datenbearbeitungseinheit sichtbar gemacht werden. Für die Prozesse erscheint es so, als würden diese Daten von der Datenbank der eigenen Datenbearbeitungseinheit verwaltet. Über diese Kopplung der Datenbanken wird dann auf die Daten einer der anderen Datenbearbeitungseinheiten zugegriffen. Durch Manipulation oder Interpretation dieser Daten ist eine tiefe Eingriffsmöglichkeit in die mit diesen Daten arbeitenden, von einem anderen Betriebssystem verwalteten Prozesse und somit eine tiefe Eingriffsmöglichkeit in die andere Datenbearbeitungseinheit möglich.

Es ist vorteilhaft, diesen Grundgedanken für den Aufbau von Steuerungen von Vermittlungsstellen zu verwenden. Die von solchen Steurungen zu erbringenden Aufgaben stellen sehr unterschiedliche Anforderung an das zu verwendende Betriebssystem. Es ergeben sich so Vorteile, wenn eine solche Steuerung aus mehreren Datenbearbeitungseinheiten aufgebaut wird, die mit unterschiedlichen Betriebssystemen arbeiten und nach obiger Grundidee für die Zusammenarbeit verkoppelt sind.

Die sich ergebenden Vorteile bestehen hierbei insbesondere in der Verringerung des Software-Implementierungsaufwands und - Testaufwands, da so an den jeweiligen Aufgabentyp angepaßte Betriebssysteme, Datenbanken und Programmiersprachen verwendet werden können.

Vorteilhafte Ausgestaltung der Erfindung sind den Unteransprüchen zu entnehmen.

Die Erfindung hat den Vorteil, daß vielfältige Einblicks- und Eingriffsmöglichkeiten in Abläufe oder Prozesse eines anderen Betriebssystemes bereitgestellt werden, wobei diese Einblicks- und Eingriffsmöglichkeiten nicht bereits im voraus durch aufeinander synchronisierte Übergaberoutinen genau definiert sein müssen. Dadurch verringern sich die Abhängigkeiten, die bei der Entwicklung entsprechender Steuerprogramme zu beachten sind. Auch eine später notwendig werdende Erweiterung der Einblicks- oder Eingriffsnahme in eine andere Datenbearbeitungseinheit ist so mit geringem Aufwand verbunden. Insgesamt wird so der Entwicklungs-, Test- und Pflege-Aufwand für den Aufbau von Steuerungen verringert, die aus mehreren zusammenwirkenden Datenbearbeitungseinheiten bestehen.

Ein weiterer Vorteil der Erfindung ist, daß sie die Trennung der Entwicklungszyklen verschiedener zusammenwirkender Datenbearbeitungseinheiten ermöglicht. Dieser Vorteil ergibt sich daraus, daß aufgrund der erfindungsgemäßen Verkopplung eine Weiterentwicklung der Steuerprogramme einer Datenbearbeitungseinheit nur mit geringen Auswirkungen für die Steuerprogramme anderer, mit dieser zusammenarbeitender Datenbearbeitungseinrichtungen verbunden ist.

Im folgenden wird die Erfindung anhand dreier Ausführungsbeispiele unter Zuhilfenahme beiliegender Zeichnungen näher erläutert.
Fig. 1 zeigt ein Blockschaltbild einer erfindungsgemäßen Vermittlungsstelle mit einer erfindungsgemäßen Steuerung.
Fig. 2 zeigt eine funktionale Darstellung der erfindungsgemäßen Steuerung nach Fig.1 für ein erstes Ausführungsbeispiel.
Fig. 3a und Fig. 3b zeigen funktionale Darstellungen einer Verkopplung zweier erfindungsgemäßen Datenbearbeitungseinheiten der erfindungsgemäßen Steuerung nach Fig. 2.
Fig. 4 zeigt eine funktionale Darstellung der erfindungsgemäßen Steuerung nach Fig. 1. für ein zweites Ausführungsbeispiel.

In dem ersten Ausführungsbeispiel wird die Anwendung des erfindungsgemäßen Verfahrens zur Steuerung einer Vermittlungsstelle in einer erfindungsgemäßen Vermittlungsstelle beschrieben, deren Steuerung aus zwei erfindungsgemäßen Datenbearbeitungseinheiten aufgebaut ist, die mittels des erfindungsgemäßen Verfahrens zur Koppelung von Datenbearbeitungseinheiten miteinander gekoppelt sind.

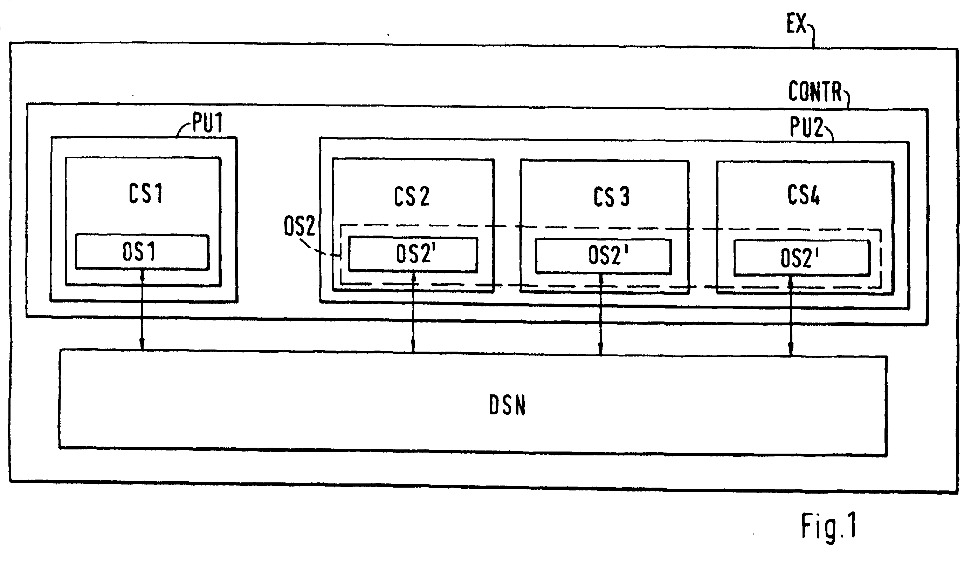

Fig. 1 zeigt eine Vermittlungsstelle EX mit einer Steuerung CONTR und einem Koppelnetz DSN. Die Steuerung CONTR und das Koppelnetz DSN tauschen untereinander Daten aus.

Die Steuereinrichtung CONTR dient der Steuerung aller von der vermittlungsstelle EX zu erbringenden Vermittlungsfunktionen und Dienstmerkmale.

Bei dem Koppelnetz DSN handelt es sich um ein übliches digitales Koppelnetz für Vermittlungsstellen. Es wird von der Steuerung CONTR gesteuert und dient sowohl zum Schalten von Verbindungen für Teilnehmer der Vermittlungsstelle EX, als auch als Kommunikationsmedium für die interne Kommunikation der Steuerung CONTR.

Es ist auch möglich, daß ein eigenständiges Kommunikationsnetz für diese interne Kommunikation verwendet wird. Bei einem solchen Kommunikationsnetz kann es sich auch um ein Netz mit einem verteilten Vermittlungsverfahren handeln, beispielsweise um ein LAN (Local Area Network) mit einem Ethernet- oder Token-Zugriffsprotokoll.

Die Steuerung CONTR weist vier unabhängige Rechnersysteme CS1 bis CS4 auf, die untereinander über das Koppelnetz DSN kommunizieren.

Jedes der Rechnersysteme CS1 bis CS4 besteht aus einem Rechner und mit diesem verbundenen peripheren Komponenten, die zur Erfüllung der jeweiligen Funktionen und zur Kommunikation mit den übrigen der Rechnersysteme CS1 bis CS4 notwendig sind.

Das Rechnersystem CS1 besteht aus einem Rechner, der über einen oder mehrere Prozessoren, über einen internen Rechnerbus, über einen Zentralspeicher, über mindestens einen Massenspeicher wie beispielsweise eine Festplatte und über Baugruppen zur Ein- und Ausgabe von Daten verfügt - Darüberhinaus verfügt das Rechnersystem CS1 noch über periphere Komponenten, die die Mensch-Maschine-Kommunikation und den Austausch von Daten über das Koppelnetz DSN ermöglichen.

Die Rechnersysteme CS2 bis CS4 sind auf die Erbringung von Telekommunikations-Funktionen ausgelegte Rechnersysteme, deren Aufbau beispielhaft dem Artikel "Hardware-Struktur", Seite 135 bis 147 der Zeitschrift Elektrisches Nachrichtenwesen, Band 56, Nr. 2/3, 1981 oder anderen Artikeln aus diesem Band entnommen werden kann.

Jedes der Rechnersysteme CS1 bis CS4 bildet eine Hardware-Plattform für eine Vielzahl von Steuerprogrammen und für ein Betriebssystem, das insbesondere den Ablauf der Steuerprogramme unterstützt und verwaltet. Die genaue Definition eines Betriebssystems kann beispielsweise der Norm DIN 44300 entnommen werden. Die Steuerprogramme sind in dem jeweiligen Rechnersystem abgespeichert und ihr Ablauf bestimmt die Funktion des jeweiligen Rechnersystems.

Das Rechnersystem CS1 arbeitet mit einem Betriebssystem OS1 und die Rechnersysteme CS2 bis CS4 mit einem verteilten Betriebssystem OS2, wobei auf jedem der Rechnersystemen CS2 bis CS4 ein Betriebssystem-Teil OS2' arbeitet.

Der Ablauf der Steuerprogramme auf dem Rechnersystem CS1 wird von dem Betriebssystem OS1 und der Ablauf der Steuerprogramme auf den Rechnersystemen CS2 bis CS4 gemeinsam vom Betriebssystem OS2 verwaltet. Das Rechnersystem CS1 mit den zugehörigen Steuerprogrammen und dem Betriebssystem OS1 bildet so eine Datenbearbeitungseinheit PU1 und die Rechnersysteme CS2 bis CS4 mit den zugehörigen Steuerprogrammen und dem verteilten Betriebssystem OS2 eine weitere Datenbearbeitungseinheit PU2. Die Betriebssysteme OS1 und OS2 sind eigenständige Betriebssysteme, d. h. sie verwalten jeweils den Ablauf der Steuerprogramme selbständig und sind nicht Betriebssystem-Teil eines übergeordneten verteilten Betriebssystems.

Es ist auch möglich, daß die Datenbearbeitungseinheit PU2 nur aus einem Rechnersystem besteht. Weiter ist es möglich, daß die Datenbearbeitungseinheiten PU1 und PU2 logische Datenbearbeitungseinheiten sind, deren Prozesse zwar jeweils von einem eigenständigen Betriebssystem verwaltet werden, die jedoch eine gemeinsame Hardware-Plattform besitzen. Das Rechnersystem würde so parallel mit beiden Betriebssystemen OS1 und OS2 arbeiten.

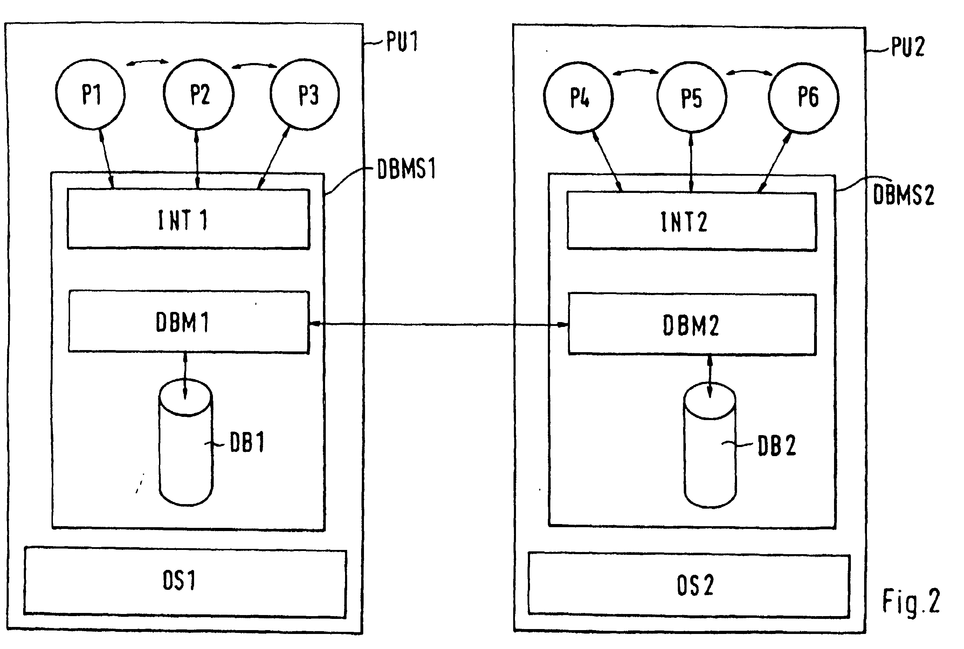

Der funktionelle Aufbau und das Zusammenwirken der Datenbearbeitungseinheiten PU1 und PU2 wird nun anhand von Fig. 2 erläutert.

Fig. 2 zeigt die Steuerung CONTR mit den Datenbearbeitungseinheiten PU1 und PU2. Die Datenbearbeitungseinheit PU1 weist drei Prozesse P1 bis P3, eine Datenbank DBMS1 und das Betriebssystem OS1 auf. Die Datenbearbeitungseinheit PU2 weist drei Prozesse P4 bis P6, eine Datenbank DBMS2 und das Betriebssystem OS2 auf. Die Prozesse P1 bis P3 kommunizieren miteinander und mit der Datenbank DBMS1. Die Prozesse P4 bis P6 kommunizieren miteinander und mit der Datenbank DBMS2. Die Datenbanken DBMS1 und DBMS2 sind miteinander verkoppelt.

Die Prozesse P1 bis P3 stellen jeweils die Durchführung eines Steuerprogramms durch das Rechnersystem CS1 dar, z. B. die Erfüllung einer bestimmten Aufgabe durch das Rechnersystem CS1. Bei den Prozessen P1 bis P3 handelt es sich hierbei um solche Prozesse, die Funktionen im Rahmen der Vermittlungsaufgaben der Steuerung CONTR erbringen. Die Anzahl von drei Prozessen P1 bis P3 ist hierbei nur beispielhaft gewählt und ändert sich gewöhnlich in Abhängigkeit vom Zustand der Datenbearbeitungseinheit PU1 ständig.

Für die Prozesse P4 bis P6 gilt entsprechendes.

Das Betriebssystem OS1 verwaltet die Prozesse P1 bis P3 und bestimmt hierfür insbesondere die Reihenfolge ihrer Durchführung, startet sie, bestimmt ihren Zustand und stellt ihnen Standard-Dienste zur Verfügung, die insbesondere den Transport von Daten zwischen Prozessen und zwischen Prozessen und Geräten des Rechnersystems CS1 durchführen. Weiter koordiniert und synchronisiert das Betriebssystem OS1 beim gleichzeitigen Ablauf von mehreren Prozessen den Zugriff auf gemeinsame Betriebsmittel, wie beispielsweise den Rechnerkern, Speicher oder Geräte.

Für die Prozesse P4 bis P6 gilt entsprechendes.

Im einzelnen handelt es sich bei dem Betriebssystem OS2 um ein Echtzeit-Betriebssystem, das speziell für die Erbringung von Funktionen ausgelegt ist, die zur Steuerung einer Vermittlungsstelle notwendig sind. Bei dem Betriebssystem OS1 handelt es sich dagegen um ein Nicht-Echtzeit-Betriebssystem, wie es üblicherweise in Universal-Rechnern verwendet wird. Ein Beispiel für solch ein Betriebssystem ist das Betriebssystem, das unter der Bezeichnung Unix vertrieben wird.

Es ist auch möglich, daß es sich bei den Betriebssystemen OS1 und OS2 um zwei gleichartige Betriebssysteme handelt.

Die Datenbank DBMS1 verwaltet unter Kenntnis des jeweiligen implementierten Datenmodells einen Teil der Daten der Datenbearbeitungseinheit PU1. Es handelt sich bei ihr um eine eigenständige Datenbank, d. h. sie ist nicht Teil einer übergeordneten, verteilten Datenbank. Bei diesen Daten handelt es sich beispielsweise um semipermanente Variablen oder um Dateien, die von Steuerprogrammen der Datenbearbeitungseinheit PU1 verwendet werden. Der Zugriff auf diese Daten erfolgt hierbei dadurch, daß die Prozesse P1 bis P3 die Daten von der Datenbank DBMS1 mittels spezieller Nachrichten anfordern oder manipulieren.

Die Datenbank DBMS1 stellt so aus logischer Sicht einen oder mehrere spezielle Prozesse dar, die Daten verwalten und sie den Prozessen P1 bis P3 auf Anforderung zur Verfügung stellen oder sie auf deren Anforderung manipuliert. Die Kommunikation zwischen den Prozessen P1 bis P3 und der Datenbank DBMS1 wird hierbei von Diensten des Betriebssystems OS1 unterstützt, was insbesondere die Verteilung der Prozesse P1 bis P3 und der Datenbank DBMS1 auf verschiedene Rechnersysteme ermöglicht, die mit einem gemeinsamen, verteilten Betriebssystem arbeiten.

Für die Datenbank DBMS2 gilt entsprechendes.

Bei den Datenbanken DBMS1 und DBMS2 handelt es sich um unterschiedliche Datenbanken. Diese Datenbanken sind entsprechend der jeweiligen Systemplattform, d. h. der Rechnerplattform sowie des Betriebssystems, und entsprechend der von der Datenbearbeitungseinheit PU1 bzw. PU2 zu erbringenden Funktionen gewählt. Bei der Datenbank DBM51 handelt es sich so beispielsweise um eine gebräuchliche relationale Datenbank, wie sie in dem Buch "The SQL-Standard", C.J. Date, 1993, Addison-Wesley beschrieben ist. Eine solche Datenbank ist beispielsweise die unter der Bezeichnung ORACLE vertriebene Datenbank. Bei der Datenbank DBMS2 handelt es sich im Gegensatz dazu so beispielsweise um eine spezielle, auf die Erbringung von Vermittlungsfunktionen optimierte verteilte Datenbank.

Es ist jedoch auch möglich, daß es sich bei den Datenbanken DBMS1 und DBMS2 um zwei gleichartige Datenbanken handelt.

Die Datenbanken DBMS1 und DBMS2 weisen im einzelnen jeweils eine Zugriffs-Schnittstelle INT1 bzw. INT2, einen Datenbankverwalter DBM1 bzw. DBM2 und eine Datenbasis DB1 bzw. DB2 auf.

Die Prozesse P1 bis P3 greifen über die Zugriffa-Schnittstelle INT1 auf die Datenbank DBMS1 zu. Die Prozesse P4 bis P6 greifen über die Zugriffs-Schnittstelle INT2 auf die Datenbank DBMS2 zu. Die Datenbankverwalter DBM1 und DBM2 greifen auf die Datenbasen DB1 bzw. DB2 zu und kommunizieren miteinander.

Die Zugriffs-Schnittstellen INT1 und INT2 stellen die Schnittstellen zwischen den Datenbanken DBMS1 und DBMS2 und den Prozessen P1 bis P3 bzw. P4 bis P6 bereit, die in diesem Zusammenhang auch als Anwendungsprozesse bezeichnet werden. Sie unterstützen so beispielsweise eine Datenbank-Zugriffs-sprache, mittels der ein Zugriff auf die zugehörige Datenbank möglich ist. Solche Datenbank-Zugriffs-Sprachen sind beispielsweise die Datenbank-Zugriffs-Sprachen SQL (Structured Query Language) oder NDL (Network Database Language). Es kann sich auch um spezielle proprietäre Datenbank-Zugriffs-Sprachen oder Zugriffsprotokolle handeln.

Die Datenbasis DB1 stellt ein Speichermedium dar, in dem die von der Datenbank DBMS1 verwalteten Daten physikalisch abgespeichert sind. Bei diesem Speichermedium handelt es sich um einen oder mehrere Massenspeicher des Rechnersystems CS1, beispielsweise um Festplattenlaufwerke. Entsprechendes gilt für die Datenbasis DB2, die die Daten der Datenbank DBMS2 verwaltet.

Es ist hierbei möglich, daß die Datenbasis über die Rechnersysteme CS2 bis CS4 verteilt ist, d. h., daß jeweils ein Teil der Daten in den Speichereinrichtungen der Rechnersysteme CS2, CS3 bzw. CS4 abgespeichert ist.

Die Datenbankverwalter DBM1 und DBM2 führen die eigentlichen Verwaltungsfunktionen für die in den Datenbasen DB1 bzw. DB2 abgespeicherten Daten der Datenbanken DBMS1 bzw. DBMS2 durch. Sie bestimmen die auf die Daten möglichen Zugriffsmechanismen und verwalten das Datenmodell, gemäß dem ein Zugriff auf die Daten erfolgt. Mittels der Kenntnis dieses Datenmodells führen sie hierbei die eigentlichen Zugriffsoperationen auf die in der jeweiligen Datenbasis abgespeicherten Daten durch.

Desweiteren sind die Datenbanken DBMS1 und DBMS2 über die Datenbankverwalter DBM1 und DBM2 miteinander verkoppelt. Über diese Verkopplung wird ein ausgewählter Satz von Daten der Datenbearbeitungseinheit PU2 für die Prozesse P1 bis P3 entsprechend dem von dem Datenbankverwalter DBM1 verwalteten Datenmodell sichtbar, d. h. bearbeitbar gemacht. Dies bedeutet, daß die Prozesse P1 bis P3 auf diesen Satz von Daten mittels der Zugriffmechanismen der Datenbank DBMS1 und entsprechend ihres Datenmodells zugreifen können. Der Zugriff auf diesen Satz von Daten unterscheidet sich so für sie nicht von einem Zugriff auf Daten der eigenen Datenbearbeitungseinheit PU1. Entsprechendes gilt umgekehrt für die Prozesse P4 bis P6.

Die vermittlungsfunktionen werden wie folgt von der Steuerung CONTR erbracht:

Die Datenbearbeitungseinrichtung PU2 ist für die Durchführung von Standardvermittlungsaufgaben oder Vermittlungsgrundaufgaben in Echtzeit zuständig. Die einzelnen Aufgaben werden hierbei von den Prozessen P4 bis P6 erbracht.

Die Datenbearbeitungseinheit PU1 ist für die Erbringung komplexerer Vermittlungsfunktionen zuständig, für die keine hohen Echtzeitanforderungen bestehen. Die Aufgabe solcher Funktionen besteht beispielsweise in der Erbringung von ISDN-Leistungsmerkmalen, Teilnehmerleistungsmerkmalen, Centrex-Diensten, in der Einzelgesprächsregistrierung oder in Anwendungen oder Diensten für Mobilfunk oder intelligente Netze. Diese Aufgaben werden von den Prozessen P1 bis P3 erbracht.

Die Daten, die die Prozesse P1 bis P6 zur Erfüllung ihrer Aufgaben benötigen, werden von den Datenbank DBMS1 oder DBMS2 verwaltet. Solche Daten sind beispielsweise semipermanente Variable der Steuerprogramme, deren Ablauf die Prozesse P1 bis P6 darstellen, Teilnehmerdaten, Daten über den Zustand des Koppelnetzes DSN, Daten über zu erbringende Telekommunikationsdienste oder Daten über die Verkehrsbelastung der Vermittlungsstelle EX. Durch die Verkopplung der Datenbanken DBMS1 und DBMS2 stehen diese Daten allen Prozessen P1 bis P6 zur Verfügung und sie können auf diese Daten mit den ihnen gewohnten Zugriffsmechanismen entsprechend des Datenmodells ihrer Datenbank zugreifen, unabhängig davon, in welcher der beiden Datenbanken die Daten jeweils verwaltet werden. Desweiteren werden auch solche Daten von den Datenbanken DBMS1 und DBMS2 verwaltet und über die Verkopplung jeweils für Prozesse der anderen Datenbearbeitungseinheit sichtbar gemacht, die den Zustand der Prozesse bestimmen oder deren Veränderung den Ablauf oder das Ergebnis der Prozesse verändert. Der Umfang, in dem Daten über die Verkopplung Prozessen der jeweiligen anderen Datenbearbeitungseinheit sichtbar gemacht werden, bestimmt hierbei die Tiefe der gegenseitigen Eingriffsmöglichkeiten.

Es ist auch möglich, daß in den Datenbanken DBMS1 und DBMS2 weitere Daten der Datenbearbeitungseinheiten PU1 bzw. PU2 verwaltet werden. Solche Daten könnten beispielsweise auch Daten sein, die von Systemprozessen der Betriebssysteme OS1 bzw. OS2 verwendet werden und deren Ablauf beeinflussen. Es könnte sich auch um Parameter des Betriebssystemkerns handeln, sodaß eine direkte Beinflußung der Ablaufsteuerung des jeweiligen anderen Betriebssystems möglich ist.

Es ist weiter möglich, daß die über die Verkopplung sichtbar gemachten Daten der anderen Datenbearbeitungseinheit auf ein objektorientiertes Informationsmodell abgebildet werden und so die Zusammenarbeit der beiden Datenbearbeitungseinheiten mittels eines objektorientierten Ansatzes realisiert wird.

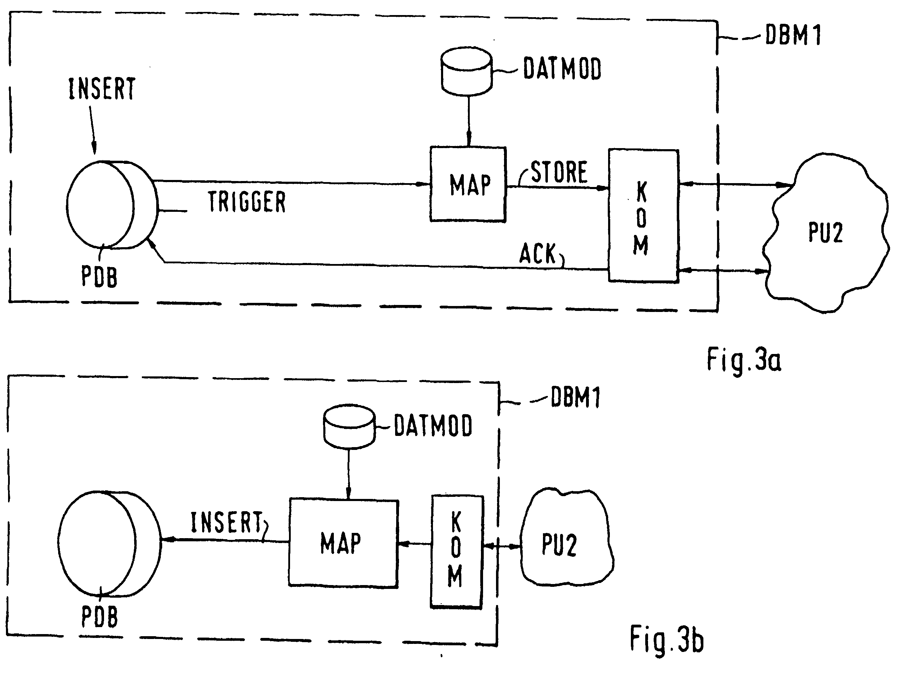

Die Verkopplung der beiden Datenbanken DBMS1 und DBMS2 mittels eines Replikationsmechanismuses wird nun anhand von Fig. 3a und Fig. 3b näher erläutert.

Fig. 3a zeigt den Datenbankverwalter DBM1 und die Datenbearbeitungseinheit PU2, die miteinander Nachrichten austauschen. Der Datenbankverwalter DBM1 weist mehrere Datenbankprozesse PDB, einen Konverter MAP, einen Datensatz DATMOD und eine Kommunikationseinrichtung KOM auf. Die Kommunikationseinrichtung KOM tauscht mit der Datenbearbeitungseinrichtung PU2 Nachrichten aus und empfängt Nachrichten von den Datenbankprozessen PDB über den Konverter MAP. Der Konverter MAP greift auf den Datensatz DATMOD zu.

Die Kommunikationseinrichtung KOM stellt die für die Kommunikation mit der Datenbearbeitungseinheit PU2 und mit dem Datenbankverwalter DBM2 erforderlichen Kommunikatonsdienste zur Verfügung.

Der Datensatz DATMOD enthält Meta-Daten, die die Datenmodelle der beiden Datenbanken DMBS1 und DBMS2 beschreiben.

Die Konvertereinrichtung MAP konvertiert mittels der Kenntnis der Datenmodelle beider Datenbanken DBMS1 und DBMS2 Nachrichten, die die Veränderung von Daten in dem einen Datenmodell betreffen in Nachrichten, die die Veränderung dieser Daten in dem anderen Datenmodell betreffen.

Die Datenbankprozesse PDB stellen Prozesse des Datenbankverwalters DBM1 dar.

Der Datenbankverwalter DBM1 hat Kenntnis über die Zuordnung von Synchronisationselementen zu einem bestimmten Satz von von ihm verwalteten Daten. Dieser Satz von Daten bestimmt hierbei die Daten, die der Datenbearbeitungseinheit PU2 sichtbar gemacht werden. Erfolgt nun von einem der Prozesse P1 bis P3 ein Datenbankzugriff INSERT, der die Veränderung von Daten bewirkt, so überprüfen die diesen Datenbankzugriff bearbeitenden Datenbanprozesse PDB, ob diesen Daten ein Synchronisationselement zugeordnet ist.

Ist dies der Fall, so senden sie eine Nachricht TRIGGER an den Konverter MAP und warten mit der Abspeicherung der Veränderung in der Datenbasis DB1, bis sie eine Bestätigungsnachricht ACK von der Kommunikationseinrichtung KOM empfangen. Ist dies nicht der Fall, so speichern sie diese Veränderung der Daten nicht in der Datenbasis DB1 ab.

Die Nachricht TRIGGER beschreibt diese Veränderung von Daten gemäß dem Datenmodel der Datenbank DBMS1 und wird von der Konvertereinrichtung MAP in eine Nachricht STORE konvertiert, die die entsprechende Veränderung von Daten gemäß dem Datenmodell der Datenbank DBMS2 beschreibt. Die Kommunikationseinrichtung KOM erzeugt aus der Nachricht STORE entsprechende Nachrichten, die diese Veränderung in der zweiten Datenbank bewirken und sendet diese Nachrichten an den Datenbankverwalter DBM2. Ist diese Veränderung von Daten in der Datenbasis DB2 eingetragen worden, so sendet der Datenbankverwalter DBM2 entsprechende Bestätigungsnachrichten, die von der Kommunikationseinrichtung KOM empfangen und an die Datenbankprozesse PDB als Bestätigungsnachricht ACK weitergereicht werden.

Auf die Bestätigungsnachricht ACK kann auch verzichtet werden.

Es ist auch möglich, daß es sich bei der Datenbank DBMS2 um eine verteilte Datenbank mit mehreren Kopien der zu verändernden Daten handelt und jeweils nur eine bestimmte Gruppe von Prozessen Zugriff auf eine der Kopien hat. Bei einer solchen Datenbank wäre es vorteilhaft, wenn die Kommunikationseinrichtung KOM Kenntnis über die Verteilung der replizierten Daten hat. Sie kann so Nachrichten gezielt an diejenigen Teile des Datenbankverwalters DBM2 senden, die für die Verwaltung der jeweiligen Datenbasis zuständig sind.

Fig. 3b zeigt den Datenbankverwalter DBM1 und die Datenbearbeitungseinheit PU2, die miteinander Nachrichten austauschen. Der Datenbankverwalter DBM1 weist die Datenbankprozesse PDB, den Konverter MAP, den Datensatz DATMOD und die Kommunikationseinrichtung KOM auf. Die Kommunikationseinrichtung KOM tauscht mit der Datenbearbeitungseinrichtung PU2 Nachrichten aus und sendet Nachrichten über den Konverter MAP an die Datenbankprozesse PDB. Der Konverter MAP greift auf den Datensatz DATMOD zu.

Für die Datenbankprozesse PDB, den Konverter MAP, den Datensatz DATMOD und die Kommunikationseinrichtung KOM gilt das zu Fig. 3a gesagte entsprechend.

Die Kommunikationseinrichtung KOM empfängt von der Datenbearbeitungseinheit PU2 eine Nachricht, die ihr die Veränderung von Daten in der Datenbank DBMS2 anzeigt. Diese Nachricht leitet sie an die Konvertereinrichtung MAP weiter, die diese Nachricht in eine Nachricht INSERT konvertiert, die die entsprechende Veränderung von Daten gemäß dem Datenmodell der Datenbank DBMS2 beschreibt. Die Nachricht INSERT wird an die Datenbankprozesse PDB gesendet und veranlaßt diese, diese Veränderung in der Datenbasis DB1 abzuspeichern.

Die Funktionen im Datenbankverwalter DBM2 werden entsprechend nach Fig. 3a und Fig. 3b durchgeführt, mit dem Unterschied, daß dort der Konverter MAP entfällt.

Es ist auch möglich, daß Veränderungen von Daten in der Datenbank DBMS2 nicht von dem Datenbankverwalter DBM2 an den Datenbankverwalter DBMS1 gemeldet werden. Interne Nachrichten der Datenbank DBMS2 würden hierzu von der Kommunikationseinrichtung KOM ausgewertet und an die Datenbankprozesse weitergereicht, wenn sie Veränderungen von replizierten Daten betreffen.

Durch diesen Replikationsmechanismus wird erreicht, daß jeweils nur die Änderungen spezieller Daten dem anderen der Datenbankverwalter DBM1 und DBM2 mitgeteilt werden und so die Menge der für die Synchronisation auszutauschenden Daten gering bleibt. Weiter wird so eine hohe Aktualität der Synchronität erreicht.

Es ist auch möglich, daß die Synchronität der Datenbanken nicht über solch einen Replikationsmechanismus sichergestellt wird, sondern daß beispielsweise in regelmäßigen Abständen alle für die Zusammenarbeit notwendigen Daten der Datenbanken DBMS1 und DBMS2 ausgetauscht werden. Die Verwendung eines Replikationsmechanismus hat jedoch den Vorteil, daß die Datenbearbeitungseinheiten PU1 und PU2 so über eine Kopplung verkoppelt werden, die hohen Geschwindigkeitsanforderungen gerecht wird.

Es ist auch möglich, die Steuerung CONTR nicht für die Steuerung der Vermittlungsstelle EX sondern für beliebige andere Steueraufgaben zu verwenden. Entsprechend würden sich dann auch die Systemplattformen und die Aufgabenverteilungen der Datenbearbeitungseinrichtungen PU1 und PU2 verändern.

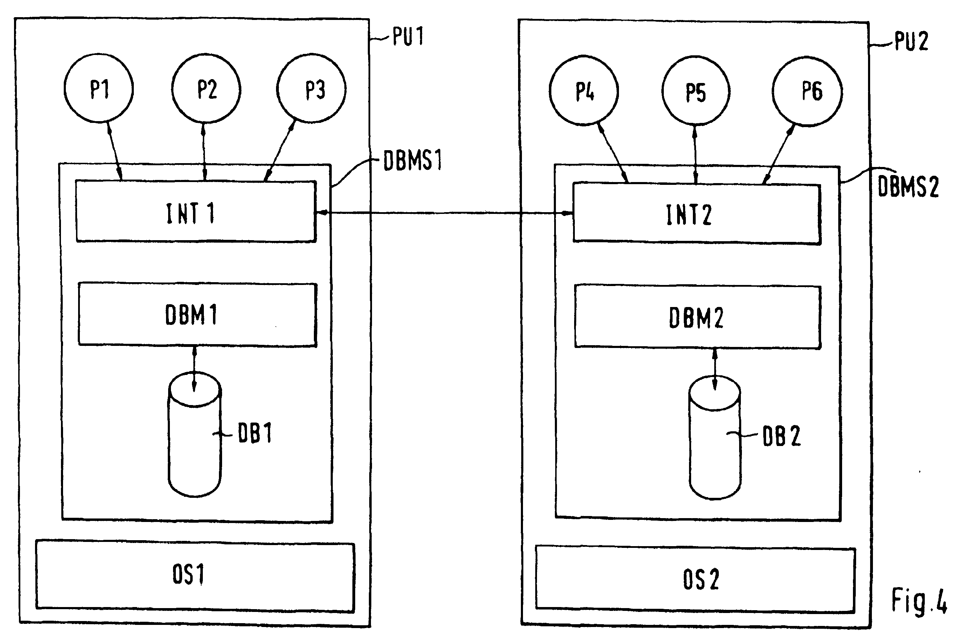

In einem zweiten Ausführungsbeispiel wird nun eine weitere Möglichkeit der Verkopplung der Datenbanken DBMS1 und DBMS2 anhand von Fig. 4 erläutert.

Fig. 4 zeigt die Datenbearbeitungseinheiten PU1 und PU2 mit den Prozessen P1 bis P3, der Datenbank DBMS1 und dem Betriebssystem OS1 bzw. mit den Prozessen P4 bis P6, der Datenbank DBMS2 und dem Betriebssystem OS2. Die Datenbanken DBMS1 und DBMS2 weisen die Zugriffs-Schnittstelle INT1, den Datenbankverwalter DBM1 und die Datenbasis DB1 bzw. die Zugriffs-Schnittstelle INT2, den Datenbankverwalter DBM2 und die Datenbasis DB2 auf. Die Zugriffs-Schnittstellen INT1 und INT2 tauschen miteinander Daten aus.

Die Datenbearbeiturigseinheiten PU1 und PU2 sind wie nach Fig. 2 aufgebaut. Alleine die Verkopplung der Datenbanken DBMS1 und DBMS2 wird über einen anderen Mechanismus realisiert.

Die für die Einwirkung auf die andere Datenbearbeitungseinheit benötigten Daten sind nicht wie beim ersten Ausführungsbeispiel in der eigenen Datenbasis abgespeichert und werden mittels eines Replikationsmechanismuses synchronisiert. In diesem Ausführungsbeispiel erfolgt der Zugriff auf diese Daten über den Austausch von Nachrichten zwischen den Zugriffs-Schnittstellen INT1 und INT2. Empfängt die Zugriffs-Schnittstelle INT1 einen der Datenbank-Zugriffs-Sprache SQL entsprechenden Zugriffswunsch auf Daten der Datenbearbeitungseinrichtung PU2, so erkennt dies die Zugriffs-Schnittstelle INT1, führt eine Konvertierung des Datenmodells durch und reicht den Wunsch an die Zugriffs-Schnittstelle INT2 weiter. Diese fordert die entsprechenden Daten beim Datenbankverwalter DBM2 an und leitet die Daten, sobald er sie erhalten hat, an die Zugriffs-Schnittstelle INT1 weiter.

Bei einer solchen Verkopplung der Datenbanken DBMS1 und DBMS2 ist es vorteilhaft, daß es sich bei den Datenbanken DBMS1 und DBMS2 um gleichartige Datenbanken handeln und so die Zugriffs-Schnittstellen INT1 und INT2 dieselbe Datenbank'-Zugriffs-Sprache unterstützen. Ist dies nicht der Fall, so ist unter Umständen keine vollständige Konvertierung zwischen solchen Datenbank-Zugriffs-Sprachen möglich.

## Patentansprüche

1. Verfahren zur Kopplung von Datenbearbeitungseinheiten (PU1, PU2), die jeweils mit einem eigenständigen Betriebssystem (OS1, OS2) arbeiten, bei dem in den Datenbearbeitungseinheiten (PU1, PU2) jeweils eine eigenständige Datenbank (DBMS1, DBMS2) bereit gestellt wird, die jeweils zumindest einen Teil der Daten der jeweiligen Datenbearbeitungseinheit (PU1, PU2) entsprechend eines jeweiligen Datenmodells verwaltet, bei dem eine erste Datenbank (DBMS1) einer ersten Datenbearbeitungseinheit (PU1) und eine zweite Datenbank (DBMS2) einer zweiten Datenbearbeitungseinheit (PU2) derart miteinander verkoppelt werden, daß die erste Datenbank (DBMS1) auf einen Satz von Daten der zweiten Datenbearbeitungseinheit (PU2) zugreift, die von der zweiten Datenbank (DBMS2) verwaltet werden und die erste Datenbank (DBMS1) diese Daten entsprechend ihres Datenmodells für Prozesse (P1 bis P3) der ersten Datenbearbeitungseinheit (PU1) bearbeitbar macht, bei dem für die Zusammenarbeit der ersten und der zweiten Datenbearbeitungseinheit (PU1, PU2) Prozesse (P1 bis P3) der ersten Datenbearbeitungseinheit (PU1) durch Zugriff auf die erste Datenbank (DBMS1) auf Daten des Satzes von Daten der zweiten Datenbearbeitungseinheit (PU2) zugreifen, bei dem die erste und die zweite Datenbank (DBMS1, DBMS2) zur Verkopplung einen Teil der von ihnen verwalteten Daten gegenseitig replizieren, bei dem die Prozesse (P1 bis P3) der ersten Datenbearbeitungseinheit (PU1) über die erste Datenbank (DBMS1) auf eine von der ersten Datenbank (DBMS1) verwaltete synchronisierte Kopie des Satzes von Daten der zweiten Datenbearbeitungseinheit (PU2) zugreifen und bei dem interne Nachrichten der ersten Datenbank (DBMS1) ausgewertet werden und eine entsprechende Nachricht an die zweite Datenbank (DBMS2) gesendet wird, wenn von der ersten Datenbank (DBMS1) Daten aus dem Satz von Daten verändert werden.

2. Verfahren nach Anspruch 1, **dadurch gekennzeichnet, daß** die Datenbearbeitungseinheiten (PU1, PU2) mit verschiedenartigen, den jeweiligen Aufgabenstellungen angepaßten Betriebssystemen (OS1, OS2) und Datenbanken (DBMS1, DBMS2) arbeiten.

3. Verfahren nach Anspruch 1, **dadurch gekennzeichnet, daß** auf den Satz von Daten von der ersten und der zweiten Datenbank (DBMS1, DBMS2) entsprechend unterschiedlicher Datenmodelle zugegriffen wird und für die Verkopplung eine Datenmodellkonvertierung durchgeführt wird.

4. Verfahren nach Anspruch 1, **dadurch gekennzeichnet, daß** Prozesse (P1 bis P3) der ersten Datenbearbeitungseinheit (PU1) auf semipermanente Variable von Prozessen (P4 bis P6) der zweiten Datenbearbeitungseinheit (PU2) zugreifen.

5. Verfahren nach Anspruch 1, **dadurch gekennzeichnet, daß** die erste und die zweite Datenbank (DBMS1, DBMS2) unterschiedliche Zugriffsmechanismen auf Daten bereitstellen und daß Prozesse (P1 bis P3) der ersten Datenbearbeitungseinheit (PU1) mittels Zugriffsmechanismen der ersten Datenbank (DBMS1) auf den Satz von Daten zugreifen.

6. Verfahren nach Anspruch 1, **dadurch gekennzeichnet, daß** den Daten aus dem Satz von Daten in der ersten Datenbank (DBMS1) jeweils ein Synchronisationselement zugeordnet wird und daß bei Veränderung von Daten, denen ein Synchronisationselement zugeordnet ist, eine entsprechende Nachricht von der ersten an die zweite Datenbank (DBMS1, DBMS2) gesendet wird.

7. Verfahren nach Anspruch 6, **dadurch gekennzeichnet, daß** bei Veränderung von Daten, denen ein Synchronisationselement zugeordnet ist, diese Veränderung von der ersten Datenbank (DBMS1) erst dann in eine Datenbasis (DB1) eingetragen wird, wenn von der zweiten Datenbank (DBMS2) eine Bestätigungsnachricht für die Durchführung dieser Veränderung empfangen worden ist.

8. Verfahren zum Steuern einer Vermittlungsstelle, bei dem zwei oder mehr Datenbearbeitungseinheiten (PU1, PU2), die mit verschiedenartigen Betriebssystemen (OS1, OS2) arbeiten, für die Durchführung von Vermittlungsfunktionen zusammenarbeiten, bei dem in jeder der Datenbearbeitungseinheiten (PU1, PU2) eine eigenständige Datenbank (DBMS1, DBMS2) bereit gestellt wird, die jeweils zumindest einen Teil der Daten der jeweiligen Datenbearbeitungseinheit (PU1, PU2) entsprechend eines jeweiligen Datenmodells verwaltet, bei dem eine erste Datenbank (DBMS1) einer ersten Datenbearbeitungseinheit (PU1) und eine zweite Datenbank (DBMS2) einer zweiten Datenbearbeitungseinheit (PU2) derart miteinander verkoppelt werden, daß die erste Datenbank (DBMS1) auf einen Satz von Daten der zweiten Datenbearbeitungseinheit (PU2) zugreift, die von der zweiten Datenbank (DBMS2) verwaltet werden, und sie entsprechend ihres Datenmodells für Prozesse (P1 bis P3) der ersten Datenbearbeitungseinheit (PU1) sichtbar macht, bei dem für die Zusammenarbeit der ersten und der zweiten Datenbearbeitungseinheit (PU1, PU2) Prozesse (P1 bis P3) der ersten Datenbearbeitungseinheit (PU1) durch Zugriff auf die erste Datenbank (DBMS1) auf Daten des Satzes von Daten der zweiten Datenbearbeitungseinheit. (PU2) zugreifen, bei dem die erste und die zweite Datenbank (DBMS1, DBMS2) zur Verkopplung einen Teil der von ihnen verwalteten Daten gegenseitig replizieren, bei dem die Prozesse (P1 bis P3) der ersten Datenbearbeitungseinheit (PU1) über die erste Datenbank (DBMS1) auf eine von der ersten Datenbank (DBMS1) verwaltete synchronisierte Kopie des Satzes von Daten der zweiten Datenbearbeitungseinheit (PU2) zugreifen und bei dem interne Nachrichten der ersten Datenbank (DBMS1) ausgewertet werden und eine entsprechende Nachricht an die zweite Datenbank (DBMS2) gesendet wird, wenn von der ersten Datenbank (DBMS1) Daten aus dem Satz von Daten verändert werden.

9. Kombination aus mindestens einer ersten und einer zweiten Datenbearbeitungseinheit (PU1, PU2), bei welcher Kombination die erste Datenbearbeitungseinheit (PU1) mit mindestens einem Rechnersystem als Hardware-Plattform, mit einem eigenständigen Betriebssystem (OS1) und mit einer Vielzahl von Steuerprogrammen versehen ist, von denen mindestens eines so ausgestaltet ist, daß es bei seinem Ablauf mindestens mit der zweiten Datenbearbeitungseinheit (PU2) zusammenarbeitet, die ihrerseits mit einem eigenständigen Betriebssystem (OS2) versehen ist, wobei die erste Datenbearbeitungseinheit (PU1) mit einer ersten Datenbank (DBMS1) zum Verwalten von Daten entsprechend eines ersten Datenmodells versehen ist, wobei die erste Datenbank (DMBS1) mit einer zweiten Datenbank (DMBS2) der zweiten Datenbearbeitungseinheit (PU2) verkoppelt ist, die so ausgestaltet ist, daß sie zumindest einen Teil der Daten der zweiten Datenbearbeitungseinheit (PU2) entsprechend eines zweiten Datenmodells verwaltet, wobei die erste Datenbank (DBMS1) so ausgestaltet ist, daß sie auf einen Satz von Daten der zweiten Datenbearbeitungseinheit (PU2) zugreift, die von der zweiten Datenbank (DMBS2) verwaltet werden und sie entsprechend des ersten Datenmodells für Prozesse (P1 bis P3) der ersten Datenbearbeitungseinheit (PU1) sichtbar macht, und wobei mindestens das eine Steuerprogramm so ausgestaltet ist, daß es bei seinem Ablauf für die Zusammenarbeit mit der zweiten Datenbearbeitungseinheit (PU2) durch Zugriff auf die erste Datenbank (DMBS1) auf Daten des Satzes von Daten der zweiten Datenbearbeitungseinheit (PU2) zugreift, wobei die erste und die zweite Datenbank (DBMS1, DBMS2) so ausgestaltet sind, daß sie zur Verkopplung einen Teil der von ihnen verwalteten Daten gegenseitig replizieren, wobei die Datenbearbeitungseinheiten (PU1, PU2) weiter so ausgestaltet sind, daß die Prozesse (P1 bis P3) der ersten Datenbearbeitungseinheit (PU1) über die erste Datenbank (DBMS1) auf eine von der ersten Datenbank (DBMS1) verwaltete synchronisierte Kopie des Satzes von Daten der zweiten Datenbearbeitungseinheit (PU2) zugreifen und daß interne Nachrichten der ersten Datenbank (DBMS1) ausgewertet werden und eine entsprechende Nachricht an die zweite Datenbank (DBMS2) gesendet wird, wenn von der ersten Datenbank (DBMS1) Daten aus dem Satz von Daten verändert werden.

10. Steuerung (CONTR) mit mindestens einem Rechnersystem als Hardware-Plattform und mit mindestens einer ersten und einer zweiten Datenbearbeitungseinheit (PU1, PU2), wobei die erste und die zweite Datenbearbeitungseinheit (PU1, PU2) jeweils mit einem eigenständigen Betriebssystem (OS1, OS2) und mit einer Vielzahl von Steuerprogrammen versehen sind, von denen mindestens ein Steuerprogramm der ersten Datenbearbeitungseinheit (PU1) so ausgestaltet ist, daß es bei seinem Ablauf mit der zweiten Datenbearbeitungseinheit (PU2) zusammenarbeitet, wobei die erste und die zweite Datenbearbeitungseinheit (PU1, PU2) mit einer ersten bzw. einer zweiten Datenbank (DMBS1, DMBS2) versehen sind, die jeweils so ausgestaltet sind, daß sie jeweils zumindest einen Teil der Daten der jeweiligen Datenbearbeitungseinheit (PU1, PU2) entsprechend eines jeweiligen Datenmodells verwalten, wobei die erste Datenbank (DMBS1) mit der zweiten Datenbank (DMBS2) verkoppelt ist, wobei die erste Datenbank (DMBS1) so ausgestaltet ist, daß sie auf einen Satz von Daten der zweiten Datenbearbeitungseinheit (PU2) zugreift, die von der zweiten Datenbank (DMBS2) verwaltet werden und sie entsprechend ihres Datenmodells für Prozesse (P1 bis P3) der ersten Datenbearbeitungseinheit (PU1) sichtbar macht, und wobei das Steuerprogramm so ausgestaltet ist, daß es bei seinem Ablauf für die Zusammenarbeit mit der zweiten Datenbearbeitungseinheit (PU2) durch Zugriff auf die erste Datenbank (DMBS1) auf Daten des Satzes von Daten der zweiten Datenbearbeitungseinheit (PU2) zugreift, wobei die erste und die zweite Datenbank (DBMS1, DBMS2) so ausgestaltet sind, daß sie zur Verkopplung einen Teil der von ihnen verwalteten Daten gegenseitig replizieren, wobei die Datenbearbeitungseinheiten (PU1, PU2) weiter so ausgestaltet sind, daß die Prozesse (P1 bis P3) der ersten Datenbearbeitungseinheit (PU1) über die erste Datenbank (DBMS1) auf eine von der ersten Datenbank (DBMS1) verwaltete synchronisierte Kopie des Satzes von Daten der zweiten Datenbearbeitungseinheit (PU2) zugreifen und daß interne Nachrichten der ersten Datenbank (DBMS1) ausgewertet werden und eine entsprechende Nachricht an die zweite Datenbank (DBMS2) gesendet wird, wenn von der ersten Datenbank (DBMS1) Daten aus dem Satz von Daten verändert werden.

11. Vermittlungsstelle (EX) mit einem Koppelnetz (DSN) und einer Steuerung (CONTR), **dadurch gekennzeichnet, daß** die Steuerung (CONTR) eine Steuerung nach Anspruch 10 ist.

## Claims

1. Method for coupling data processing units (PU1, PU2), which each work with an independent operating system (OS1, OS2), wherein the data processing units (PU1, PU2) are each equipped with an independent database (DBMS1, DBMS2), which in each case manages at least one part of the data of the respective data processing unit (PU1, PU2) according to a respective data model, wherein a first database (DBMS1) of a first data processing unit (PU1) and a second database (DBMS2) of a second data processing unit (PU2) are coupled together in such a way that the first database (DBMS1) accesses a set of data of the second data processing unit (PU2), which data is managed by the second database (DBMS2) and the first database (DBMS1) makes it possible for this data to be processed according to its data model by processes (P1 to P3) of the first data processing unit (PU1), wherein for the interaction of the first and the second data processing unit (PU1, PU2) processes (P1 to P3) of the first data processing unit (PU1) by access to the first database (DBMS1) access data of the set of data of the second data processing unit (PU2), wherein for the coupling the first and the second database (DBMS1, DBMS2) reciprocally replicate a part of the data they manage, wherein the processes (P1 to P3) of the first data processing unit (PU1) via the first database (DBMS1) access a synchronized copy, managed by the first database (DBMS1), of the set of data of the second data processing unit (PU2), and wherein internal messages of the first database (DBMS1) are evaluated and a corresponding message is sent to the second database (DBMS2) if data from the set of data is being changed by the first database (DBMS1).

2. Method according to Claim 1, **characterized in that** the data processing units (PU1, PU2) work with different kinds of operating systems (OS1, OS2) and databases (DBMS1, DBMS2), adapted to the individual task requirements.

3. Method according to Claim 1, **characterized in that** the set of data is accessed by the first and the second database (DBMS1, DBMS2) according to different data models and a data model conversion is performed for the coupling.

4. Method according to Claim 1, **characterized in that** processes (P1 to P3) of the first data processing unit (PU1) access semi-permanent variables of processes (P4 to P6) of the second data processing unit (PU2).

5. Method according to Claim 1, **characterized in that** the first and the second database (DBMS1, DBMS2) provide different mechanisms for accessing data and that processes (P1 to P3) of the first data processing unit (PU1) access the set of data using access mechanisms of the first database (DBMS1).

6. Method according to Claim 1, **characterized in that** in each case a synchronization element is assigned to the data from the set of data in the first database (DBMS1) and that for a change of data to which a synchronization element is assigned, a corresponding message is sent from the first to the second database (DBMS1, DBMS2).

7. Method according to Claim 6, **characterized in that** for a change of data to which a synchronization element is assigned, this change is not entered in a data basis (DB1) by the first database (DBMS1) until an acknowledge message for the execution of this change has been received from the second database (DBMS2).

8. Method for controlling a switching centre, wherein two or more data processing units (PU1, PU2), which work with different kinds of operating systems (OS1, OS2), cooperate for the execution of switching functions, wherein in each of the data processing units (PU1, PU2) an independent database (DBMS1, DBMS2) is provided, which in each case manages at least one part of the data of the respective data processing unit (PU1, PU2) according to a respective data model, wherein a first database (DBMS1) of a first data processing unit (PU1) and a second database (DBMS2) of a second data processing unit (PU2) are coupled together in such a way that the first database (DBMS1) accesses a set of data of the second data processing unit (PU2), this data being managed by the second database (DBMS2), and makes it visible according to its data model for processes (P1 to P3) of the first data processing unit (PU1), wherein for the interaction of the first and the second data processing unit (PU1, PU2) processes (P1 to P3) of the first data processing unit (PU1) by access to the first database (DBMS1) access data of the set of data of the second data processing unit (PU2), wherein for the coupling the first and the second database (DBMS1, DBMS2) reciprocally replicate a part of the data they manage, wherein the processes (P1 to P3) of the first data processing unit (PU1) via the first database (DBMS1) access a synchronized copy, managed by the first database (DBMS1), of the set of data of the second data processing unit (PU2), and wherein internal messages of the first database (DBMS1) are evaluated and a corresponding message is sent to the second database (DBMS2) if data from the set of data is being changed by the first database (DBMS1).

9. Combination of at least a first and a second data processing unit (PU1, PU2), in which combination the first data processing unit (PU1) is equipped with at least one computer system as hardware platform, with an independent operating system (OS1) and with a large number of control programs, of which at least one is developed such that in its execution it interacts at least with the second data processing unit (PU2), which for its part is equipped with an independent operating system (OS2), the first data processing unit (PU1) being equipped with a first database (DBMS1) for managing data according to a first data model, the first database (DBMS1) being coupled with a second database (DBMS2) of the second data processing unit (PU2), which is developed such that it manages at least one part of the data of the second data processing unit (PU2) according to a second data model, the first database (DBMS1) being developed such that it accesses a set of data of the second data processing unit (PU2), which data is managed by the second database (DBMS2) and makes it visible according to the first data model for processes (P1 to P3) of the first data processing unit (PU1), and at least the one control program being developed such that in its execution for the interaction with the second data processing unit (PU2) by access to the first database (DBMS1) it accesses data of the set of data of the second data processing unit (PU2), the first and the second database (DBMS1, DBMS2) being developed such that for the coupling they reciprocally replicate a part of the data they manage, the data processing units (PU1, PU2) further being developed such that the processes (P1 to P3) of the first data processing unit (PU1) via the first database (DBMS1) access a synchronized copy, managed by the first database (DBMS1), of the set of data of the second data processing unit (PU2), and that internal messages of the first database (DBMS1) are evaluated and a corresponding message is sent to the second database (DBMS2) if data from the set of data is being changed by the first database (DBMS1).

10. Controller (CONTR) with at least one computer system as hardware platform and with at least a first and a second data processing unit (PU1, PU2), the first and the second data processing unit (PU1, PU2) each being equipped with an independent operating system (OS1, OS2) and with a large number of control programs, of which at least one control program of the first data processing unit (PU1) is developed such that in its execution it interacts with the second data processing unit (PU2), the first and the second data processing unit (PU1, PU2) being equipped with a first and a second database (DBMS1, DBMS2) respectively, which are each developed such that they manage at least a part of the data of the respective data processing unit (PU1, PU2) according to a respective data model, the first database (DBMS1) being coupled with the second database (DBMS2), the first database (DBMS1) being developed such that it accesses a set of data of the second data processing unit (PU2), which data is managed by the second database (DBMS2) and makes it visible according to its data model for processes (P1 to P3) of the first data processing unit (PU1), and the control program being developed such that in its execution for the interaction with the second data processing unit (PU2) by access to the first database (DBMS1) it accesses data of the set of data of the second data processing unit (PU2), the first and the second database (DBMS1, DBMS2) being developed such that for the coupling they reciprocally replicate a part of the data they manage, the data processing units (PU1, PU2) further being developed such that the processes (P1 to P3) of the first data processing unit (PU1) via the first database (DBMS1) access a synchronized copy, managed by the first database (DBMS1), of the set of data of the second data processing unit (PU2), and that internal messages of the first database (DBMS1) are evaluated and a corresponding message is sent to the second database (DBMS2) if data from the set of data is being changed by the first database (DBMS1).

11. Switching centre (EX) with a switching network (DSN) and a controller (CONTR), **characterized in that** the controller (CONTR) is a controller according to Claim 10.

## Revendications

1. Procédé de connexion d'unités de traitement de données (PU1, PU2) qui fonctionnent respectivement avec un système d'exploitation autonome (OS1, OS2), avec lequel un système de base de données autonome (DBMS1, DBMS2) est à chaque fois mis à disposition dans les unités de traitement de données (PU1, PU2), lequel gère à chaque fois au moins une partie des données de l'unité de traitement de données (PU1, PU2) correspondante conformément à un modèle de données correspondant, avec lequel un premier système de base de données (DBMS1) d'une première unité de traitement de données (PU1) et un deuxième système de base de données (DBMS2) d'une deuxième unité de traitement de données (PU2) sont connectés entre eux de telle sorte que le premier système de base de données (DBMS1) accède à un ensemble de données de la deuxième unité de traitement de données (PU2), lesquelles sont gérées par le deuxième système de base de données (DBMS2) et le premier système de base de données (DMBS1) rend ces données traitables pour les processus (P1 à P3) de la première unité de traitement de données (PU1) conformément à son modèle de données, avec lequel, pour la collaboration entre la première et la deuxième unités de traitement de données (PU1, PU2), les processus (P1 à P3) de la première unité de traitement de données (PU1) accèdent aux données de l'ensemble de données de la deuxième unité de traitement de données (PU2) en accédant au premier système de base de données (DBMS1), avec lequel le premier et le deuxième systèmes de base de données (DBMS1, DBMS2) répliquent mutuellement une partie des données qu'ils gèrent pour réaliser la connexion, avec lequel les processus (P1 à P3) de la première unité de traitement de données (PU1) accède par le biais du premier système de base de données (DBMS1) à une copie synchronisée de l'ensemble de données de la deuxième unité de traitement de données (PU2) qui est gérée par le premier système de base de données (DBMS1) et avec lequel les messages internes du premier système de base de données (DBMS 1) sont interprétés et un message en conséquence est envoyé au deuxième système de base de données (DBMS2) lorsque des données de l'ensemble de données sont modifiées par le premier système de base de données (DBMS1).

2. Procédé selon la revendication 1, **caractérisé en ce que** les unités de traitement de données (PU1, PU2) fonctionnent avec des systèmes d'exploitation (OS1, OS2) et des systèmes de base de données (DBMS1, DBMS2) différents, adaptés aux tâches respectives.

3. Procédé selon la revendication 1, **caractérisé en ce que** le premier et le deuxième systèmes de base de données (DBMS1, DBMS2) accèdent à l'ensemble de données conformément à des modèles de données différents et une conversion du modèle de données est effectuée pour la connexion.

4. Procédé selon la revendication 1, **caractérisé en ce que** les processus (P1 à P3) de la première unité de traitement de données (PU1) accèdent aux variables semi-permanentes des processus (P4 à P6) de la deuxième unité de traitement de données (PU2).

5. Procédé selon la revendication 1, **caractérisé en ce que** le premier et le deuxième système de base de données (DBMS1, DBMS2) fournissent des mécanismes d'accès aux données différents et que les processus (P1 à P3) de la première unité de traitement de données (PU1) accèdent à l'ensemble de données au moyen des mécanismes d'accès du premier système de base de données (DBMS1).

6. Procédé selon la revendication 1, **caractérisé en ce qu'**un élément de synchronisation est à chaque fois associé aux données de l'ensemble de données dans le premier système de base de données (DBMS1) et qu'en cas de modification des données auxquelles est associé un élément de synchronisation, un message correspondant est envoyé du premier au deuxième système de base de données (DBMS1, DBMS2).

7. Procédé selon la revendication 6, **caractérisé en ce qu'**en cas de modification de données auxquelles est associé un élément de synchronisation, cette modification n'est consignée par le premier système de base de données (DBMS1) dans une base de données (DB1) que lorsque le deuxième système de base de données (DBMS2) a reçu un message de confirmation pour la réalisation de cette modification.

8. Procédé de commande d'un central de commutation avec lequel deux unités de traitement de données (PU1, PU2) ou plus, qui fonctionnent avec des systèmes d'exploitation (OS1, OS2) différents, collaborent pour l'accomplissement de fonctions de commutation, avec lequel un système de base de données autonome (DBMS1, DBMS2) est à chaque fois mis à disposition dans chacune des unités de traitement de données (PU1, PU2), lequel gère à chaque fois au moins une partie des données de l'unité de traitement de données (PU1, PU2) correspondante conformément à un modèle de données correspondant, avec lequel un premier système de base de données (DBMS1) d'une première unité de traitement de données (PU1) et un deuxième système de base de données (DBMS2) d'une deuxième unité de traitement de données (PU2) sont connectés entre eux de telle sorte que le premier système de base de données (DBMS1) accède à un ensemble de données de la deuxième unité de traitement de données (PU2), lesquelles sont gérées par le deuxième système de base de données (DBMS2) et sont rendues visibles pour les processus (P1 à P3) de la première unité de traitement de données (PU1) conformément à son modèle de données, avec lequel, pour la collaboration entre la première et la deuxième unités de traitement de données (PU1, PU2), les processus (P1 à P3) de la première unité de traitement de données (PU1) accèdent aux données de l'ensemble de données de la deuxième unité de traitement de données (PU2) en accédant au premier système de base de données (DBMS1), avec lequel le premier et le deuxième systèmes de base de données (DBMS1, DBMS2) répliquent mutuellement une partie des données qu'ils gèrent pour réaliser la connexion, avec lequel les processus (P1 à P3) de la première unité de traitement de données (PU1) accède par le biais du premier système de base de données (DBMS1) à une copie synchronisée de l'ensemble de données de la deuxième unité de traitement de données (PU2) qui est gérée par le premier système de base de données (DBMS1) et avec lequel les messages internes du premier système de base de données (DBMS1) sont interprétés et un message en conséquence est envoyé au deuxième système de base de données (DBMS2) lorsque des données de l'ensemble de données sont modifiées par le premier système de base de données (DBMS1).

9. Combinaison d'au moins une première et une deuxième unité de traitement de données (PU1, PU2), combinaison avec laquelle la première unité de traitement de données (PU1) comprenant au moins un système informatique faisant office de plate-forme physique, comprenant un système d'exploitation autonome (OS1) et comprenant un grand nombre de programmes de commande dont au moins un est configuré de telle sorte que lors de son exécution, il collabore au moins avec la deuxième unité de traitement de données (PU2) qui, de son côté, est munie d'un système d'exploitation autonome (OS2), la première unité de traitement de données (PU1) étant munie d'un premier système de base de données (DBMS1) pour gérer les données correspondant à un premier modèle de données, le premier système de base de données (DBMS1) étant connecté à un deuxième système de base de données (DBMS2) de la deuxième unité de traitement de données (PU2) qui est configuré de telle sorte qu'il gère au moins une partie des données de la deuxième unité de traitement de données (PU2) conformément à un deuxième modèle de données, le premier système de base de données (DBMS1) étant configuré de telle sorte qu'il accède à un ensemble de données de la deuxième unité de traitement de données (PU2), qui sont gérées par le deuxième système de base de données (DBMS2), et les rend visibles pour les processus (P1 à P3) de la première unité de traitement de données (PU1) conformément au premier modèle de données, et l'au moins un programme de commande étant configuré de telle sorte que lors de son exécution, pour la collaboration avec la deuxième unité de traitement de données (PU2), accède aux données de l'ensemble de données de la deuxième unité de traitement de données (PU2) en accédant au premier système de base de données (DBMS1), le premier et le deuxième systèmes de base de données (DBMS1, DBMS2) étant configurés de telle sorte qu'ils répliquent mutuellement une partie des données qu'ils gèrent pour réaliser la connexion, les unités de traitement de données (PU1, PU2) étant de plus configurées de telle sorte que les processus (P1 à P3) de la première unité de traitement de données (PU1) accèdent par le biais du premier système de base de données (DBMS 1) à une copie synchronisée de l'ensemble de données de la deuxième unité de traitement de données (PU2) qui est gérée par le premier système de base de données (DBMS 1) et que les messages internes du premier système de base de données (DBMS1) sont interprétés et un message en conséquence est envoyé au deuxième système de base de données (DBMS2) lorsque des données de l'ensemble de données sont modifiées par le premier système de base de données (DBMS1).

10. Commande (CONTR) comprenant au moins un système informatique faisant office de plate-forme physique et comprenant au moins une première et une deuxième unités de traitement de données (PU1, PU2), la première et une deuxième unités de traitement de données (PU1, PU2) étant à chaque fois munies d'un système d'exploitation autonome (OS1, OS2) et d'un grand nombre de programmes de commande dont au moins un programme de commande de la première unité de traitement de données (PU1) est configuré de telle sorte que lors de son exécution, il collabore avec la deuxième unité de traitement de données (PU2), la première et la deuxième unités de traitement de données (PU1, PU2) étant munies d'un premier et d'un deuxième systèmes de base de données (DBMS1, DBMS2) qui sont respectivement configurés de telle sorte qu'ils gèrent à chaque fois au moins une partie des données de l'unité de traitement de données (PU1, PU2) correspondante conformément à un premier modèle de données, le premier système de base de données (DBMS1) étant connecté au deuxième système de base de données (DBMS2), le premier système de base de données (DBMS1) étant configuré de telle sorte qu'il accède à un ensemble de données de la deuxième unité de traitement de données (PU2), qui sont gérées par le deuxième système de base de données (DBMS2), et les rend visibles pour les processus (P1 à P3) de la première unité de traitement de données (PU1) conformément au premier modèle de données, et le programme de commande étant configuré de telle sorte que lors de son exécution, pour la collaboration avec la deuxième unité de traitement de données (PU2), accède aux données de l'ensemble de données de la deuxième unité de traitement de données (PU2) en accédant au premier système de base de données (DBMS1), le premier et le deuxième systèmes de base de données (DBMS1, DBMS2) étant configurés de telle sorte qu'ils répliquent mutuellement une partie des données qu'ils gèrent pour réaliser la connexion, les unités de traitement de données (PU1, PU2) étant de plus configurées de telle sorte que les processus (P1 à P3) de la première unité de traitement de données (PU1) accèdent par le biais du premier système de base de données (DBMS1) à une copie synchronisée de l'ensemble de données de la deuxième unité de traitement de données (PU2) qui est gérée par le premier système de base de données (DBMS1) et que les messages internes du premier système de base de données (DBMS1) sont interprétés et un message en conséquence est envoyé au deuxième système de base de données (DBMS2) lorsque des données de l'ensemble de données sont modifiées par le premier système de base de données (DBMS1).

11. Central de commutation (EX) comprenant un réseau de connexion (DSN) et une commande (CONTR), **caractérisé en ce que** la commande (CONTR) est une commande selon la revendication 10.
